# FASCICULE DE BREVET EUROPEEN

(11) **EP 2 428 377 B1**
(45) Date de publication et mention de la délivrance du brevet: **24.04.2013**
(21) Numéro de dépôt: 10382247.4
(22) Date de dépôt: 14.09.2010
(51) Int. Cl.: B60J 1/00, B60J 1/08, B61D 25/00

(54) **Fenêtre échangeable intelligente**
Intelligentes Wechselfenster
Smart interchangeable window

(43) Date de publication de la demande: 14.03.2012
(73) Titulaire: Industrias E. Diaz, S.A., 50720 La Cartuja (ES)
(72) Inventeur: Díaz Gascón, Emilio, 50720, La Cartuja (ES)
(74) Mandataire: Manzano Cantos, Gregorio

(56) Documents cités:
- EP-A2- 1 710 105
- DE-A1- 4 009 349
- DE-A1- 10 244 138

## Description

### OBJET DE L'INVENTION

Ce mémoire descriptif comme l'indique son titre concerne un ensemble de fenêtre facilement remplaçable, qui a pour objet la disposition d'une fenêtre constituée par un encadrement avec ses vitrages correspondants pour son remplacement immédiat pour une application fondamentalement dans la substitution des fenêtres hermétiques de wagons de chemin de fer et d'autobus de transport en commun et d'autres véhicules de transporte, consistant en un encadrement de fenêtre et le cadre correspondant fixé sur le châssis du véhicule, qui demeure fermé par le propre ensemble de fenêtre, lequel, selon l'invention, est facilement extractible au moyen d'une série de rainures disposées sur le contour de l'encadrement de la fenêtre et des verrous mobiles ou déplaçables commandés par une serrure à travers des unions flexibles guidées à travers les verrous mobiles sur le cadre fixe, en permettant la libération d'une fenêtre vitrée défectueuse par une autre correcte avec une très grande rapidité, en obtenant comme résultat, que le véhicule corrigé soit prêt à être utiliser sans perte de temps dans sa fonctionnalité.

### ÉTAT DE L'ART

L'état de l'art habituel du remplacement des fenêtres en fonction d'une cassure de vitre, rayage ou tout autre défaut des fenêtres dans ces véhicules, est le fait qu'en étant collés directement sur le châssis, pour son replacement, on requiert le nettoyage de l'encadrement disposé sur la propre carrosserie du véhicule et la postérieure mise en place des nouvelles glaces. Cette opération est réalisée à l'aide de colle appliquée sur le périmètre du cadre avec l'emboîtement des vitres, cette colle a le problème du fait que l'on a besoin de quelques jours de séchage et en conséquence le véhicule ne peut être utilisé pendant une période de temps.

De même, le mécanisme de libération des verrous mobiles de l'invention est inspiré à partir de l'objet du brevet européen n° 05380259, du même inventeur pour: "SMART E:VIERGENCY WINDOW" dans lequel on inclut également un organe flexible pour la libération de verrous mobiles.

### BUT DE L'INVENTION

Le but général de la présente invention ici préconisée, est l'amélioration dudit problème de remplacement ou replacement des fenêtres des véhicules concernés et plus précisément les temps d'attente, en évitant une période de non-utilisation du véhicule, au moyen du changement instantané de la glace ou fenêtre défectueuse, qui a lieu au moyen du remplacement de la fenêtre endommagée, directement, par une autre du magasin de pièces de rechange. Ce replacement est réalisé au moyen de l'ouverture et de la libération de la fenêtre détériorée à travers une serrure située sur le cadre fixe de la carrosserie du véhicule à laquelle on peut accéder par l'encadrement de la fenêtre, laquelle est connectée à des unions flexibles qui terminent sur un ressort de sécurité, qui à leur tour disposent sur les unions flexibles (corde ou câble) des verrous ou griffes, glissants à l'intérieur du cadre fixe, et qui au moyen de la serrure se déplacent, en donnant lieu à l'ouverture de la fenêtre, car celle-ci, sur le contour de son encadrement, dispose de rainures espacées qui, dans la position déterminée, avec la position de manoeuvre de la serrure demeurent situées sur les verrous ou griffes en permettant la libération de la fenêtre extractible en demeurant déverrouillée ou libérée de l'ancrage, en faisant en conséquence le remplacement à la plus grande vitesse, avec une autre nouvelle fenêtre qui sera convenablement assurée avec la manoeuvre de verrou de la serrure, qui ordonne à l'union flexible, à travers ses verrous, de verrouiller la fenêtre avec l'encadrement fixe. Les ressorts de sécurité aident à la fixation naturelle du verrou. Dans la pratique et pour une sécurité évidente, la manipulation de la serrure aura lieu au moyen d'une clé spéciale à disposition seulement du personnel autorisé.

### BRÈVE DESCRIPTION DES DESSINS

Pour compléter la description en cours et afin d'aider à une meilleure compréhension des caractéristiques de l'invention, on accompagne cette description en tant que partie intégrante de celle-ci d'un jeu de dessins dans lesquels à caractère illustratif et non pas limitatif, on a représenté ce qui suit:

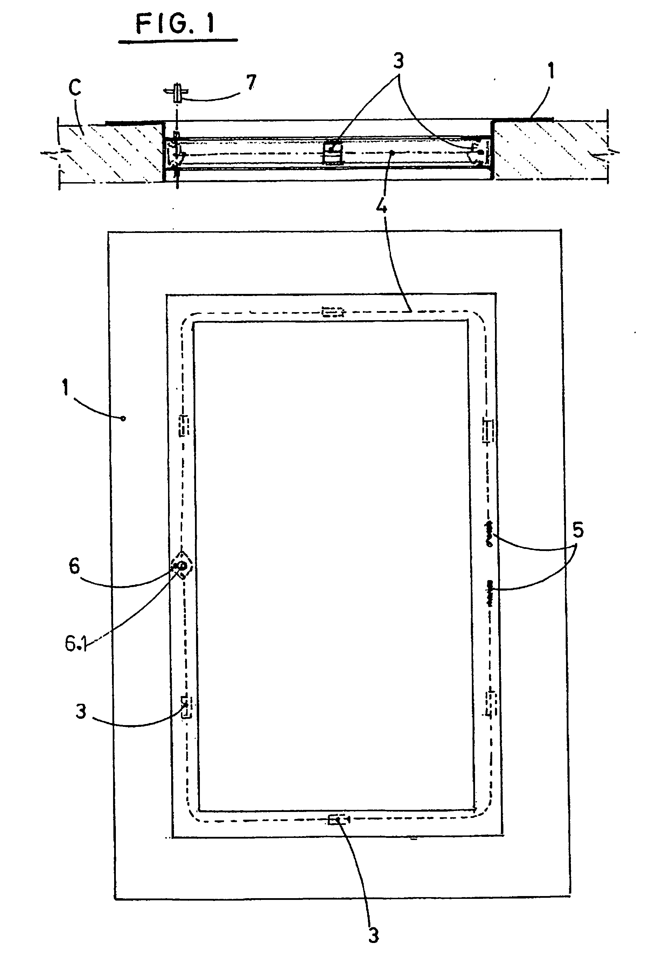

La Figure 1, correspond à une section transversale et une vue avant du cadre fixe (1).

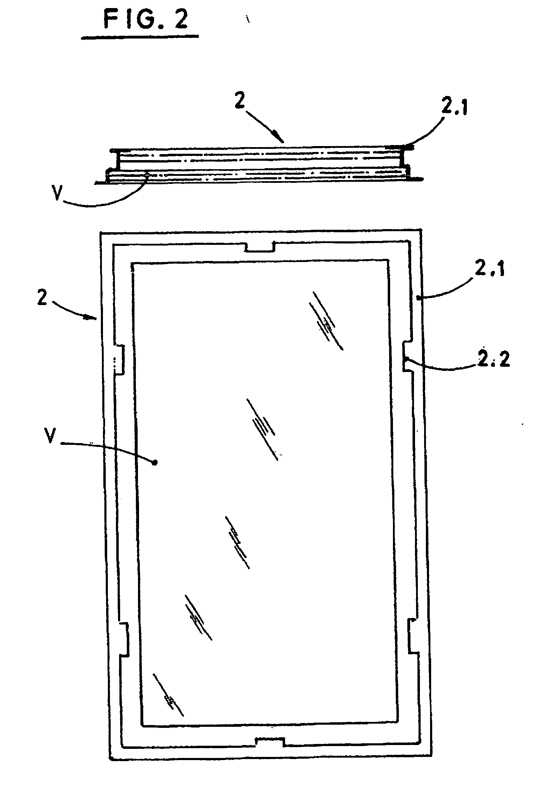

La Figure 2, montre une section transversale et sa vue avant correspondante de l'encadrement de la fenêtre extractible (2).

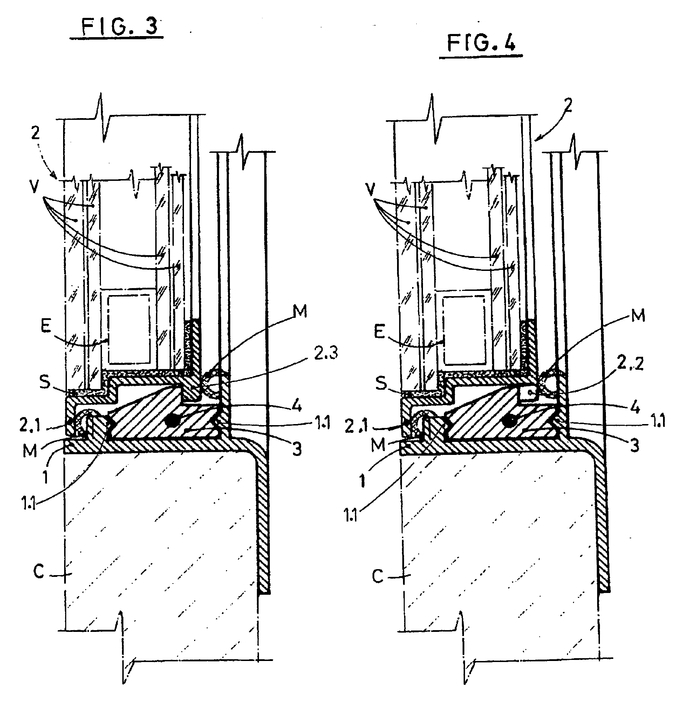

La figure 3, est une section verticale et transversale de l'ensemble avec les différentes pièces qui interviennent dans cet ensemble de fenêtre échangeable en position fermée.
La figure 4, correspond à la même section de la figure 3, dans laquelle la fenêtre échangeable est en position extractible pour pouvoir être remplacée.

Ces figures sont en rapport avec les références alphanumériques suivantes:
1.- Cadre fixe.
   1.1.- Nervures de glissement de verrous mobiles.
2.- Ensemble fenêtre extractible.
   2.1.- Encadrement fenêtre.
   2.2.- Rainures de déverrouillage
   2.3.- Rebord de rainures d'encadrement fenêtre et reguidage verrous mobiles.
3.- Verrous mobiles.
4.- Union flexible.
5.- Ressort de sécurité.
6.- Serrure.
7.- Clé passe-partout.
   C.- Châssis véhicule.
   E.- Espaceurs vitres.
   M.- Joint.
   S.- Colle de verrou.

### DESCRIPTION PRÉFÉRÉE DE L'INVENTION

A la vue de ces figures et références alphanumériques, on peut observer la simple mise en oeuvre de l'ensemble obtenue pour remplacer la fenêtre endommagée; ce replacement est réalisé au moyen de l'ouverture et de la libération de la fenêtre détériorée à travers une serrure (6) située sur le cadre fixe (1) avec accès (6.1) dans l'encadrement (2.1) de la fenêtre (2) de la carrosserie (C) du véhicule. Cette serrure est connectée à des unions flexibles (4) qui terminent dans un ressort de sécurité (5) et à leur tour elles disposent sur les unions flexibles (corde ou câble) de verrous mobiles (3) qui au moyen de la commande de la serrure se déplacent guidés intérieurement par les nervures ( 1.1 ) des profiles du cadre fixe (1) et par un rebord (2.3) dans l'encadrement de la fenêtre (2.1), en donnant lieu à la libération et le retrait de la fenêtre (2) endommagée, car celle-ci, dispose sur son encadrement de rainures espacées (2.2), qui à la position déterminée avec celle de manoeuvre de la serrure (6), demeurent situées sur les verrous mobiles (3) et en conséquence, cela permet la libération de la fenêtre en demeurant celle-ci déverrouillée, en réalisant le remplacement à la plus grande vitesse avec un autre nouvel ensemble fenêtre (2) complet, incorpore alors sur l'encadrement (2.1) la vitre ou les vitres (V), les espaceurs (E) et la fixation avec de la colle (S), et qui incorpore sur le cadre fixe (1) avec la simple manoeuvre de rotation de la serrure (6), laquelle ordonne à l'union flexible (4) à travers ses verrous mobiles (3), de verrouiller l'ensemble fenêtre (2) avec le cadre fixe (1), avec les ressorts de sécurité (5) qui aident à la fixation du verrouillage, dans la pratique et pour la sécurité évidente, la manipulation de la serrure se fera avec une clé spéciale ou passe-partout (7), à disposition seulement du personnel autorisé.

Une fois suffisamment décrite précédemment la nature de l'invention, en tenant compte des termes de la rédaction ils devront être pris dans le sens le plus large et non pas dans un sens limitatif, ainsi que la description de la mise en oeuvre tout en démontrant qu'elle constitue une avance technique positive dans la fabrication de fenêtres échangeables intelligentes, c'est pour cela que l'on demande l'enregistrement de brevet, l'essentiel de ladite invention étant ce qui par la suite est spécifié dans les revendications suivantes :

## Revendications

1. Fenêtre échangeable intelligente et cadre fixe (1) pour l'application sur les autobus, wagons de chemin de fer et autres permettant le changement instantané d'une nouvelle fenêtre en substitution d'une autre endommagée qui se caractérisent par la libération de la fenêtre détériorée à travers une serrure (6) située sur le cadre fixe (1) de la fenêtre (2) et qui est accessible (6.1) par l'encadrement (2.1) de la fenêtre (2) de la carrosserie (C) du véhicule, la serrure (6) étant connectée à des unions flexibles (4) qui se terminent en un ressort de sécurité (5), et qui à leur tour disposent sur les unions flexibles (4), corde ou câble, de verrous mobiles (3), guidés à l'intérieur du cadre fixe (1), à travers des nervures (1.1), qui se déplacent au moyen de la commande de la serrure (6), en donnant lieu à la libération et au retrait de la fenêtre (2) endommagée, car celle-ci dispose de rainures (2.2) sur son encadrement (2.1), qui à la position déterminée avec la position de la manoeuvre de la serrure (6) demeurent situées sur les verrous mobiles (3) et en conséquence, permettent la libération de la fenêtre (2) en se déverrouillant, en réalisant son remplacement à la plus grande vitesse avec une autre nouvelle fenêtre (2), contenant sur l'encadrement (2.1) la vitre ou les vitres (V), les espaceurs (E) et la fixation (S), et qu'une fois repositionnée sur l'encadrement fixe (1) avec une simple manoeuvre de rotation de la serrure (6) qui ordonne à l'union flexible (4) à travers ses verrous mobiles (3), de verrouiller l'ensemble fenêtre (2) contre le cadre fixe (1) par l'effet des dits ressorts de sécurité (5), qui aident à la fixation du verrouillage.

2. Fenêtre échangeable intelligente et cadre fixe (1) selon la revendication 1 **CARACTERISÉS en ce que** l'ouverture et fermeture de la serrure sont réalisées avec une clé spéciale ou passe-partout (7).

## Claims

1. A smart interchangeable window and fixed frame (1) for its application on buses, railway wagons and other vehicles, enabling to immediately interchange a new window in replacement of a damaged window, **characterized by** the release of the damaged window using a lock (6) located on the fixed frame (1) of the window (2) and that is accessible (6.1) from the casing (2.1) of the window (2) of the vehicle body (C), the lock (6) being connected to flexible connectors (4) finishing in a safety spring (5), which, on the flexible connectors (4), i.e., cords or cables, are further provided with moveable bolts (3), guided inside the fixed frame (1), through the ribs (1.1), which move by operating the lock (6), causing thus the release and retrieval of the damaged window (2), given that said window is provided with slots (2.2) on its casing (2.1), which at a position determined by the lock (6) maneuver position, they remain positioned onto the moveable bolts (3), and consequently, enable the window (2) release, by unlocking thereof, to replace it very quickly for a new window (2), the casing (2.1) comprising the glass or glasses (V), the spacers (E) and the seals (S), and that once repositioned on the fixed casing (1) with a simple rotation maneuver of the lock (6) that commands the flexible connector (4) through its moveable bolts (3), to block the window (2) assembly against the fixed frame (1) as a result of said safety springs (5), that help fixing the bolts.

2. The smart interchangeable window and fixed frame (1) according to claim 1, **characterized in that** the lock opening and closing are realized using a special key or master key (7).

## Patentansprüche

1. Ein intelligentes austauschbares Fenster und ein feststehender Rahmen (1) zu deren Anwendung auf Autobussen, Eisenbahnwaggons und anderen Fahrzeugen, wobei es ermöglicht wird, unmittelbar ein neues Fenster in Ersatz eines beschädigten Fensters auszuwechseln, **gekennzeichnet durch** die Ablösung des beschädigten Fensters unter Verwendung von einer sich auf dem festen Rahmen (1) des Fensters (2) befindenden Verriegelung (6) und welche vom Gehäuse (2.1) des Fensters (2) der Fahrzeugkarosserie (C) her zugänglich ist (6.1), wobei die Verriegelung (6) mit flexiblen Anschlüssen (4) verbunden ist, welche in einer Sicherheitsfeder (5) enden, die auf den flexiblen Anschlüssen (4), d.h., Seilen oder Kabeln, ferner mit beweglichen Bolzen (3) vorgesehen sind, innerhalb des festen Rahmens (1) geführt, **durch** die Rippen (1.1), welche sich **durch** Betätigung der Verriegelung (6) bewegen, wodurch somit die Ablösung und die Zurückgewinnung des beschädigten Fensters (2) verursacht wird, da das besagte Fenster mit Schlitzen (2.2) auf dessen Gehäuse (2.1) vorgesehen ist, welche in einer **durch** die Bedienungsposition der Verriegelung (6) bestimmten Position auf den beweglichen Bolzen (3) positioniert verbleiben, und folglich die Ablösung des Fensters (2) ermöglichen, **durch** Entriegeln derselben, um es sehr schnell gegen ein neues Fenster (2) zu ersetzen, wobei das Gehäuse (2.1) die Scheibe oder die Scheiben (V), die Abstandshalter (E) und die Dichtungen (S) umfasst, und welches, einmal wieder auf dem feststehenden Gehäuse (1) positioniert, mit einer einfachen Rotationsbedienung der Verriegelung (6), welche den flexiblen Anschluss (4) steuert mithilfe dessen beweglichen Bolzen (3), die Fensterbaueinheit (2) gegen den feststehenden Rahmen (1) blockiert, als Ergebnis besagter Sicherheitsfedern (5), welche helfen, die Schrauben zu befestigen.

2. Das intelligente austauschbare Fenster und der feststehende Rahmen (1) nach Anspruch 1, **dadurch gekennzeichnet, dass** das Öffnen und das Schließen der Verriegelung unter Verwendung von einem speziellen Schlüssel oder Hauptschlüssel (7) erfolgen.
